# EUROPEAN PATENT APPLICATION

(11) **EP 2 416 291 A1**
(43) Date of publication of application: **08.02.2012**
(21) Application number: 11176427.0
(22) Date of filing: 03.08.2011
(51) Int. Cl.: G06Q 90/00

(54) **Performance management system**

(30) Priority: 04.08.2010 IN MU22132010
(71) Applicant: Tata Consultancy Services Limited, 400021 Mumbay (IN)
(72) Inventor: Anand, Ritu, 400001 MUMBAI - Maharashtra (IN); Kapadia, Nikhil, 400097 MUMBAI - Maharashtra (IN); John, Sindhu S, 400001 MUMBAI - Maharashtra (IN)
(74) Representative: Collin, Jérôme

(57) **Abstract**

Systems and methods for managing and evaluating the performance of an employee in an organization are described herein. In one implementation, the method includes receiving a query to initiate a performance management process and providing at least one performance measures based on the query received. Further, a rating is received for at least one performance measures. The performance measures are analyzed based on a rating received for the at least one performance measures to generate an assessment score. The assessment score indicates the performance of the employee in an organization.

## Description

### TECHNICAL FIELD

The present subject matter relates, in general, to systems and methods for evaluating and managing the performance of an employee in an organization.

### BACKGROUND

Generally, in an organization or an enterprise, different people are assigned different roles and responsibilities based on their skill sets and competencies. Some may also be working on different projects or tasks at the same time, and, accordingly, might have been taking on multiple roles and handling different responsibilities, simultaneously. In addition to showcasing core skill sets and competencies, people are also expected to show a variety of behavioral competencies, partly on the basis of which, a person's performance is evaluated.

Organizations tend to assess performance of their employees on a periodic basis, say after every 6 months or at the end of a fiscal year. Performance assessment helps in distinguishing employees based on their performance in the past and then appraising them accordingly. It is an important aspect of organizational governance as it helps in identifying employee(s) that have the required potential or caliber to head or execute future projects, take newer roles, and handle more responsibilities. It also helps identify gaps, if any, between the management and the employees.

Overall, performance assessment is performed so that adequate performance-related feedback is provided to the employees. The feedback provided to the employees may be positive or negative, according to his or her performance as evaluated or perceived by the management. Positive feedback definitely encourages and motivates the employees to work more, negative feedback too helps the employees in terms of identifying areas of improvement for them to work upon in the future.

Conventionally, performance assessment of the employee is carried out by discussions and meetings between the employee and his supervisors. However, in large organizations, such as multinational corporations, where a number of employees work in different parts of the world, an employee and his supervisors may be working in at different geographic locations at disparate time zones. Thus, it becomes difficult to establish a system for interaction between the employee and his supervisors for the purpose of performance assessment of the employee.

Further, in the conventional method of performance assessment of the employee, since most of the steps require in-person meetings and discussions and are performed manually, there are chances that data collected during the process may have human-induced discrepancies. Thereby causing a lot of dissatisfaction to the employee and administrative difficulties to the supervisors. Also, management and analysis of the diverse data collected during the process is a complicated matter, often consuming a lot of time of the supervisors who are important resources of the organization.

### SUMMARY

This summary is provided to introduce concepts related to management of performances of employees in an organization, which are further described below in the detailed description. This summary is not intended to identify essential features of the claimed subject matter nor is it intended for use in determining or limiting the scope of the claimed subject matter.

In one implementation, a system and method for managing the performance of the employee includes receiving a query to initiate a performance management process. Further, based on the query received one or more performance measures are determined by the system. The performance measures are analyzed based on a rating assigned to each of the performance measures to generate an assessment score. The assessment score indicates the performance of the employee.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components.

Fig. 1 illustrates an exemplary network environment implementing a performance management system for evaluating and managing performances of employees in an organization, in accordance with an implementation of the present subject matter.

Fig. 2 illustrates an exemplary performance management system, in accordance with an implementation of the present subject matter.

Fig. 3 illustrates an exemplary performance evaluation process, in accordance with an implementation of the present subject matter.

Fig. 4 illustrates an exemplary promotion process, in accordance with an implementation of the present subject matter.

Fig. 5 illustrates an exemplary method to identify a performance band of an employee in an organization, in accordance with an implementation of the present subject matter.

### DETAILED DESCRIPTION

Method(s) and system(s) for evaluating and managing performance of an employee in an organization are described. A performance management system may implement different performance management processes, such as a performance evaluation process, a promotion process, and a performance improvement process.

The employees of the organization may be classified into multiple user groups, such as a first evaluator group, a second evaluator group, and a third evaluator group. Each user group can include one or more members. An employee may be part of any one or more of such user groups. Further, the employee profiles corresponding to various user groups can be defined in the performance management system. These user groups interact with the performance management system through one or more client devices. A user can log into the performance management system and, based on his or her login information, the user is authenticated and the user group and accordingly, the employee profile may be identified.

In one implementation, in order to implement the performance evaluation process, a query is generated by an employee to initiate the performance evaluation process. The query may be generated by a member of the first evaluator group also, to initiate the performance evaluation process for an employee. In an embodiment, from amongst the employees of the organization the first evaluator group and second evaluator group is formed.

In response to the generated query, the performance management system accesses employee data pertaining to the employee under consideration, from one or more databases. The databases may include data of all the employees in the organization and may include data, such as employee identification (ID), date of joining, number of years of service, office location, visa information, project allocation details, current and/or past roles and responsibilities.

Based on the requirement for carrying out the performance evaluation process, only relevant employee data is accessed from the data stored in the database(s). Subsequently, the employee data is validated by the employee under consideration. For the purpose, in an implementation, an employee may log into the performance management system. Based on login information provided by the employee, an employee profile and a user group is identified for the employee.

After the data is validated the performance management system sends a notification to at least one evaluator from the first evaluator user group for setting a set of performance measures for the employee. In one implementation, the set of performance measures may be goals or targets set for the employee. The set of performance measures may include, for example, client satisfaction, deadline compliance timeliness of a project, managerial skills exhibited by the employee, number of projects completed. The first evaluator interacts with the performance management system to select the role of the employee. Based on the selected role, corresponding performance measures are provided by the performance management system. The first evaluator can choose some or all the performance measures for the employee.

Once the performance measures are set for the employee, the performance management system sends a notification to at least one evaluator of a second evaluator group to review the performance measures. The performance management system may send a notification to the employee also to review the performance measures set for him or her.

Once the performance measures are notified to the employee, the first evaluator, and the second evaluator, the performance management system sends a notification to the employee to carry out a self evaluation of his or her performance measures. The employee can log into the performance management system to carry out the self evaluation. Self evaluation may involve, for example, providing a rating to oneself, on a predefined scale of measure, against each of the performance measure.

Once the self evaluation is completed, the performance management system sends a notification to the first evaluator to evaluate the performance of the employee. The first evaluator may provide, for example, a rating against each of the performance measure. In one example, ratings provided can be scores against each of the performance measure. In another example, the rating may be in the form of recommendation and suggestion provided by the manager wherein the recommendation and suggestion may be further processed to determine an equivalent score. The first evaluator may also review the self evaluation of the employee. The performance management system may then send a notification to the second evaluator to review the evaluation done by the first evaluator.

Subsequent to the self-evaluation and the evaluation made by the first evaluator, an assessment score is generated by the performance management system. After the assessment score is generated, the assessment score is notified to the employee. Based on the assessment score, the employee may be categorized in a particular category from a group of categories such as a good performer, an average performer, and an under performer.

In one embodiment, a performance improvement process is implemented for the employees not performing well in the organization.

In yet another implementation, the performance management system can also initiate the performance evaluation process for an employee who has recently completed or is about to complete his or her probation period in the organization. For example, performance evaluation can be done twice, after completing six months in the organization and after completing one year in the organization.

Further, the performance management system may be configured to perform the promotion process for one or more deserving employees. In an implementation, at least one member of the first evaluator group generates a query to start the promotion process. The first evaluator selects a promotion criteria. The promotion criteria includes, for example, role, grade, promotion eligibility, total work experience of the employee, and number of years in the current role. For example, the first evaluator may choose to promote employees who have been working in a current role for more than two years. Accordingly, the first evaluator may select number of years in the current role as the promotion criteria. In response the system displays a list of all the employees who are associated with the first evaluator and fulfill the specified criteria. It may be noted that the performance management system displays a list of only those employees who are eligible for promotion. In one embodiment, the performance management system determines the eligibility of every employee in accordance with a set of predefined rule. For example, the performance management system may identify an employee to be eligible for promotion only if the employee has completed three years in the organization. In other words, for any criteria selected by the first evaluator, a list of only those employees is displayed who fulfill the promotion eligibility.

The first evaluator selects one or more employees for whom the promotion is to be initiated from amongst the displayed list. After the employee is selected, the performance management system can display, for example, by way of a promotion form, the employee data of the employees. The employee data includes information such as the current role, and number of years in the organization. The employee data is then validated by the first evaluator.

Subsequent to data validation, the performance management system may also send a notification to the first evaluator to provide the proposed role of the employee. Further, based on the proposed role the first evaluator sets the performance measures for the employee for the promotion process. In one embodiment, based on the proposed role, the performance management system indicates suitable performance measures to the first evaluator. In another embodiment, the performance measures may also be provided based on strength and competencies exhibited by the employee in the current role. After the performance measures for the promotion process are set by the first evaluator, the performance management system sends a notification to the second evaluator to review the performance measures. Subsequently, the performance management system may send a notification to the first evaluator to evaluate the performance measures for the promotion process, as finalized. The first evaluator may provide a rating against each of the performance measures for the employee. In one implementation, rating may be score provided against each of the measure. In another implementation, ratings may be recommendation and suggestions provided by the first evaluator. Once the first evaluator has provided ratings, a notification is sent to the second evaluator to review the evaluation provided by the first evaluator.

After the evaluation is finalized, the performance management system generates an assessment score for the employees. The employee is promoted to the proposed role or position based on the assessment score and a notification is sent to the employee pertaining to the promotion of the employee. Further, the performance management system updates the current role of the employee as the proposed role.

The present invention provides a centralized system to evaluate and manage the performance of one or more employees in the organization. The present system provided an end-to-end performance monitoring solution that is not bound to any geographical or spatial constraint. Further, the performance management system enables maintenance of records related to all the processes for the employees in the organization. The system updates user profiles based on the result of different processes.

While aspects of the described systems and methods for performance management can be implemented in any number of different computing systems, environments, and/or configurations, embodiments for the performance management system are described in the context of the following exemplary system(s) and method(s).

### EXEMPLARY SYSTEMS

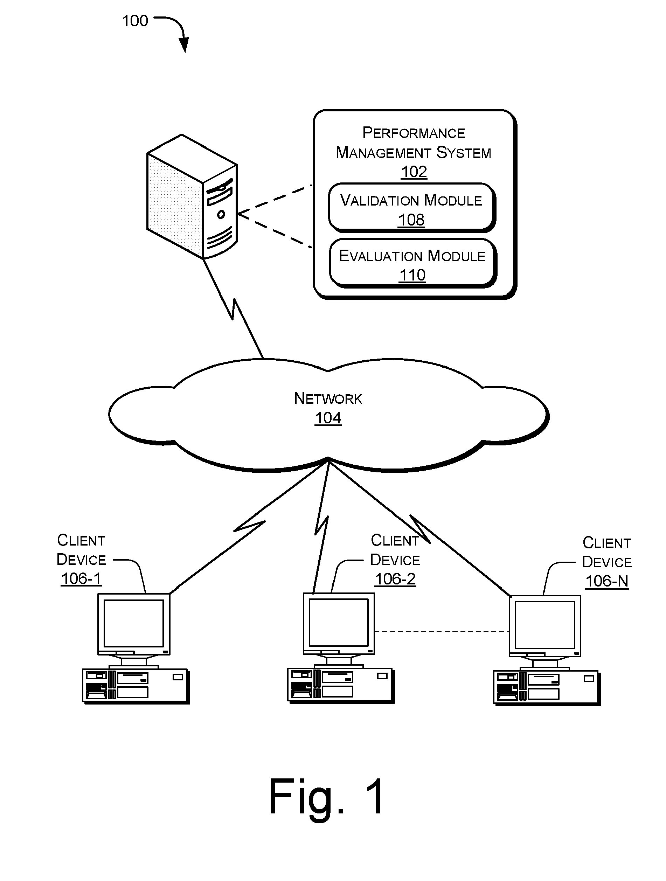

Fig. 1 shows an exemplary network environment 100 implementing a performance management system 102 to evaluate and manage performances of employees in an organization, according to an embodiment of the present subject matter. The performance management 102 is configured to implement performance management processes such as a performance evaluation process, a promotion process and a performance improvement process. The network environment 100 includes the performance management system 102 communicating, through a network 104, with a plurality of client devices 106-1, 160-2,... 160-N, hereinafter collectively referred to as client devices 106.

The network 104 may be a wireless network, wired network or a combination thereof. The network 104 can be implemented as one of the different types of networks, such as intranet, local area network (LAN), wide area network (WAN), the internet, and such. The network 104 may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other.

The performance management system 102 and the client devices 106 can be implemented as any of a variety of computing devices, including, for example, servers, a desktop PC, a notebook or portable computer, a workstation, a mainframe computer, a mobile computing device, an entertainment device, and an internet appliance. The performance management system 102 can implement different performance management processes, for example, the performance evaluation process, the promotion process, and the performance improvement process.

All the employees of an organization can be classified into multiple user groups, such as a first evaluator group, a second evaluator group, a third evaluator group, and so on. Further, each user group can include one or more members. Some members of any one group may be part of other groups as well. For example, an employee can be a member of the first as well as the second evaluator group.

For the purpose of explanation, hereinafter, it may be considered that from amongst the employees of the organization the first evaluator group and second evaluator group is formed. The first evaluator group includes one or more evaluators for assessing performance of the employees, and the second evaluator group includes one or more evaluators for reviewing assessment performed by the first evaluator group. It will be appreciated by a person skilled in the art that the term 'employees' includes all the employees who are under consideration for a performance evaluation process, a promotion process and a performance improvement process. Accordingly, the first evaluator group may include one or more members evaluating criteria for promotion for the employees, while the second evaluator group may include one or members reviewing the criteria for promotion as suggested by the first evaluator group.

For example, consider a performance evaluation cycle of an employee X. In this case, an employee Y from the first evaluator group can be the first evaluator and an employee Z from the second evaluator group can be the second evaluator. Likewise, if the performance evaluation process is initiated for the employee Y, the first evaluator can be the employee Z while the second evaluator can be an employee A from, say the third evaluator group. In an implementation, all members of all the user groups interact with the performance management system 102 to participate in either of the processes implemented by the performance management system 102 through the client devices 106.

In one implementation, user profiles of all the members in different user groups are defined in the performance management system 102. For example, employee X can log into the performance management system 102 through any of the client device 106 to interact with the performance management system 102. Upon login the employee profile may be identified. Based on the user profile, employee X may be allowed or restricted from initiating either of the processes or accessing any data. For example, the performance management system 102 may restrict employee X to initiate the promotion process for his or her own promotion within the organization.

In one embodiment, the performance management system 102 includes a validation module 108 and an evaluation module 110. The validation module 108 may be configured to provide authorization to the employees to access the performance management system 102. The validation module 108 may also be configured to allow the employees to interact with the performance management system 102 to validate employee data.

In one implementation, based on an employee profile identified during log in, an employee is provided restricted access to the performance management system 102. For example, an employee not belonging to the evaluator groups may not be allowed to access data meant to be accessed by the evaluator groups or initiate processes defined to be initiated by a member of the evaluator groups. Further, the evaluation module 110 may also impose similar restrictions on members of the evaluator groups. For example, a member of the first evaluator group may not access data that is meant to be accessed by the members of the second evaluator group.

Further, the evaluation module 110 is configured to evaluate performance measures for different processes. Performance measures, as will be discussed in detail in subsequent figures, are identified on the basis of the role of the employee under consideration. In one implementation, the performance measures, in case of the performance evaluation process, are goals set for the employee based on his or her current role. Likewise, in case of the promotion process, the performance measures can be based on a proposed role for the employee and strength and competencies exhibited by the employee in the current role. In both the cases, a rating is provided against each of the performance measures, and an assessment score is generated by the evaluation module 110. The assessment score may indicate a relative performance of the employee in case of performance evaluation or competencies or potential of the employee to take on the proposed role, in case of promotion.

In one implementation, in order to initiate the performance evaluation process, an employee generates a query through a client device, such as client device 106-1. In an implementation, a query may also be initiated by the first evaluator. The query initiates the performance evaluation process in the performance management system 102.

In response to the query, the validation module 108 generates a request to access employee data corresponding to the employee under consideration from one or more databases (not shown in the figure). The employee data may include details of projects completed by the employee in the current assessment year, roles and responsibilities held during the current assessment year, performance in the past assessment year(s), and other particulars, such as employee ID, date of joining, office location.

In an implementation, the validation module 108 provides the employee data to the employee to validate the data. In one implementation, the validation module 108 provides employee data to the first evaluator if the query was generated by the first evaluator. Subsequent to data validation, a request to set the performance measures for the employee is sent by the evaluation module 110 to the first evaluator.

In response to the request, the first evaluator sets one or more performance measures for the employee based on roles and responsibilities performed by the employee in the organization. The evaluation module 110 facilitates the first evaluator to select a role for the employee. Based on the selected role, one or more performance measures are provided by the evaluation module 110. The first evaluator may choose some or all the performance measures and finalize the performance measures.

After the performance measures are set for the employee the evaluation module 110 sends a review notification to one or more members of the second evaluator group. The second evaluator logs into the performance management system 102 using a client device, say the client device 106-3.

After the performance measures are approved or rejected by the second evaluator, the evaluation module 110 sends a review notification to the employee whose performance is to be evaluated. The employee reviews performance measures set for him or her, and provides a confirmation of same to the evaluation module 110. The evaluation module 110 then may send a notification to the first evaluator notifying that the performance measures are reviewed by the employee and the second evaluator.

Following this, the evaluation module 110 sends a self evaluation notification to the employee to evaluate himself or herself on the one or more performance measures that have been finalized. Self evaluation may involve, for example, providing a rating to oneself on a scale of measure, against each of the performance measures. Once self evaluation is done, the evaluation module 110 sends a notification to the first evaluator indicating that the employee has completed his own evaluation.

Subsequently, the evaluation module 110 may send a separate evaluation notification to the first evaluator to evaluate performance of the employee. The first evaluator, in a similar manner as described above, provides a rating against each of the performance measure. In an implementation, in addition to providing the ratings, the evaluator may also review the self evaluation of the employee.

Subsequent to the evaluation by the first evaluator, the evaluation module 110 sends a review notification to the second evaluator to review the evaluation performed by the first evaluator. The second evaluator reviews the evaluation and provides a confirmation of the same to the evaluation module 110, which sends a notification to the first evaluator indicating that the second evaluator has completed the review.

Subsequently, the evaluation module 110 calculates an assessment score based on the self-evaluation of the employee and the evaluation done by the by the first evaluator. In an implementation, the assessment score is calculated by taking weighted average of the ratings provided for performance measures. The evaluation module 110 then notifies the assessment score to the employee. In an implementation, the employee under consideration may be categorized in one of the different categories, such as a good performer, an average performer, and an under performer based on the assessment score.

In one embodiment, a performance improvement process may be initiated by the performance management system 102. For example, if the employee is categorized as an under performer, the evaluation module 110 automatically initiates the performance improvement process. In another implementation, based on the current and previous assessment score, the first evaluator may send a query to initiate the performance improvement process for the employee. During the process, performance of the employee is closely observed and the employee is provided with the required guidance or assistance. In another implementation, the performance evaluation process can be initiated for an employee who has not completed the probation period such as a trainee or a new recruit. The performance management system 102 may be configured to carry out the performance evaluation process based on predefined evaluation criteria predefined for these employees.

In one embodiment, the evaluation module 110 may also determine a performance band for the employee. In an implementation, the evaluation module 110 indentifies a performance band for the employee out of a plurality of performance bands by comparing the assessment score of the employee with the assessment score of other employees.

Further, the performance management system 102 can initiate the promotion process for the employees. In an implementation, the promotion process can be initiated after the evaluation process is over for all the employees in the organization or when all the employees have been assigned with a performance band. In yet another implementation, the promotion process may initiate separately without any dependence on the results of the current performance evaluation.

The first evaluator sends a query to the performance management system 102 to initiate the promotion process. Once initiated, the first evaluator selects the promotion criteria, such as role, grade of the employee, number of years in the current role, total work experience of the employee. For example, the first evaluator may decide that one or more employees currently in grade four to be promoted to the next level. After the promotion criteria is selected, the performance management system 102 identifies all the promotion eligible employees who fulfill the specified promotion criteria. The performance management system 102 allows the first evaluator to initiate the promotion process for an eligible employee only. Based on the selected promotion criteria, the validation module 108 displays a list of all the employees eligible for the promotion process. According to the afore going examples, validation module 108 may display a list of employees who are eligible for promotion and are at grade 4. The first evaluator selects on or more employees for the promotion process. Subsequent to selection of the employee, the validation module 108 displays, for example, by way of a promotion form, the employee data of the selected employees. The employee data includes current role of the employee, number of years in the organization, current project, last completed project etc. The validation module 108 sends a notification to the first evaluator to validate the employee data and facilitates validation of the employee data by the first evaluator.

Subsequent to data validation, the evaluation module 110 sends a request to the first evaluator to provide the proposed role of the employee and performance measures pertaining to the promotion of the employee. In one implementation, the performance measures are provided based on strength and competencies exhibited by the employee in the current role. In another implementation, the performance measures are provided based on the role proposed for the employee by the first evaluator. In response to the request, the evaluation module 110 facilitates the first evaluator to select the performance measures for the employee. Based on the proposed role the evaluation module 110 provides performance measures to the first evaluator. The first evaluator may choose one or more performance measures. After the performance measures are selected by the first evaluator, the evaluation module 110 sends a review notification to the second evaluator to review the selected performance measure. The second evaluator reviews the performance measures for the employee in a manner similar to the review carried out by the second evaluator in case of performance evaluation process described earlier.

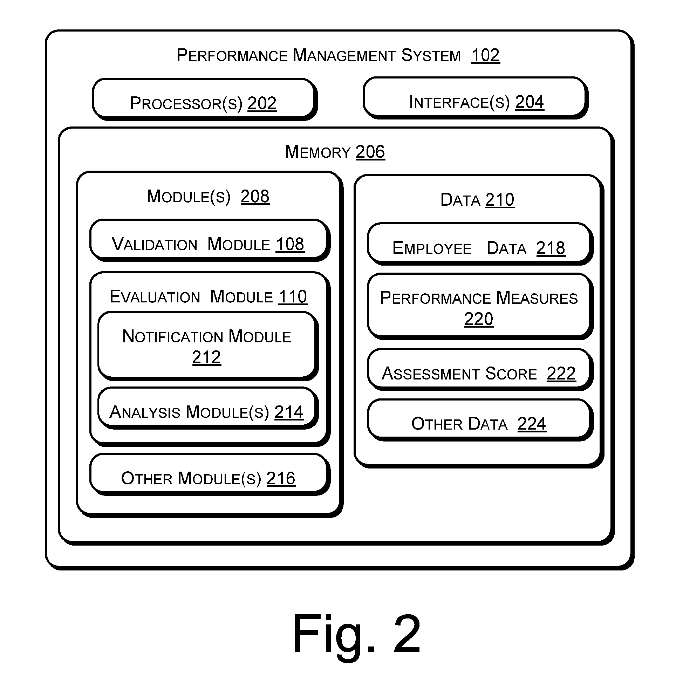

After the performance measures are finalized by the second evaluator the evaluation module 110 sends an evaluation notification to the first evaluator. The first evaluator provides a rating against each of the performance measures. In one implementation ratings provided can be scores for each of the performance measures. In another implementation, scores may be generated based on the recommendations and suggestion provided by the first evaluator. The evaluation module 110 analysis the ratings provided by the first evaluator and generate an assessment score. Based on the assessment score the employee may be promoted to the proposed role. The manner in which the performance is evaluated and managed is further explained in detail in conjunction with Fig. 2.

Fig. 2 illustrates an exemplary performance management system 102, in accordance with an embodiment of the present subject matter. In said embodiment, the performance management system 102 includes a processor 202, interface(s) 204, and a memory 206. The processor 202 is coupled to the memory 206. The processor 202 may be implemented as one or more microprocessors, microcomputers, microcontrollers, digital signal processors, central processing units, state machines, logic circuitries, and/or any devices that manipulate signals based on operational instructions. Among other capabilities, the processor 202 is configured to fetch and execute computer-readable instructions stored in the memory 206.

The interface(s) 204 may include a variety of software and hardware interfaces, for example, a web interface allowing the performance management system 102 to interact with the client devices 106. Further, the interface(s) 204 may enable the performance management system 102 to communicate with other computing devices, such as web servers and external repositories or databases. The interface(s) 204 can facilitate multiple communications within a wide variety of networks and protocol types, including wired networks, for example LAN, cable, etc., and wireless networks such as WLAN, cellular, or satellite. The interface(s) 204 may include one or more ports for connecting a number of computing devices to each other or to another server.

The memory 206 can include any computer-readable medium known in the art including, for example, volatile memory (e.g., RAM), and/or non-volatile memory (e.g., EPROM, flash memory, etc.). The memory 206 includes one or more module(s) 208 and data 210. In one embodiment, the module 208 further includes the validation module 108, the evaluation module 110, and other module(s) 216. The evaluation module 110 may further include a notification module 212 and an analysis module 214.

The data 210 serves, amongst other things, as a repository for storing data processed, received and generated by the one or more of the module(s) 208. The data 210 includes, for example, employee data 218, performance measures 220, assessment score 222, and other data 222. In one embodiment, the employee data 218, the performance measures 220, and the assessment score 222, may be stored in the memory 206 in the form of data structures.

As mentioned previously, the performance management system 102 can implement different performance management processes such as the performance evaluation process, the promotion process, and the performance improvement process. In case of the promotion process the validation module 108 facilitates the first evaluator to select the promotion criteria. The promotion criteria include, for example, role, grade, promotion eligibility, total work experience, number of years in the current role etc. After the promotion criteria are selected the validation module 108, determines the eligibility of all the employees for promotion process, who meets the promotion criteria. The validation module 108 then displays the list of all the eligible employees for whom the promotion process can be initiated. One or more employees are selected by the first evaluator for the promotion process. Subsequent to selection of the employee for the promotion, the validation module 108 accesses the employee data 218 from different databases.

In order to implement any of the processes, the validation module 108 accesses the employee data 218 of the employee under consideration from different databases (not shown) based on the query generated by first evaluator or the employee. The employee data 218 may include professional and personal data of an employee in the organization. In one implementation, in case of promotion process, the employee data 218 may be displayed by way of the promotion form. After the employee data 218 is accessed by the validation module 108 the data is validated by the member of the concerned user group mentioned previously through the client device 106 interacting with the validation module 108. In one implementation, in case of performance evaluation process employee data 218 may be validated by the employee under consideration or the first evaluator. In another implementation, in case of promotion process employee data 218 may be validated by the first evaluator group. In case the employee data 218 provided by the validation module 108 has some errors, request for correction of the employee data 218 is routed to the validation module 108 by the member of the concerned user group. In response to the request for the correction of employee data 218, the validation module 108 makes the necessary correction, for example, the validation module 108 may again access the data from different databases.

Subsequent to data validation, the notification module 212 sends a notification to the first evaluator to select the performance measures 220 for the employee under consideration. In case of the promotion process, the notification module 212 sends a notification to the first evaluator to provide the proposed role of the employee along with the performance measures. In case, of the performance evaluation process the performance measures 220 can be goals and targets set for the employee based on the role performed by the employee. In case of the promotion process, the performance measures 220 are based on a role proposed for the employee and the strength and competencies exhibited by the employee in the current role. In one implementation, the notification module 212 is configured to maintain the timeline of the performance management processes. The notification modules initiates start of a process and also sends a notification when the process has to be completed.

In order to select the performance measures 220 for the employee, the evaluation module 110 facilitates the first evaluator to first define or select current role(s) of the employee under consideration, in the organization. In case of promotion process the first evaluator may select the role proposed for the employee. The evaluation module 110 provides the performance measures 220 corresponding to the role selected. In one embodiment, a plurality of performance measures 220 can be provided for each role selected by the first evaluator. The first evaluator may choose one or more of these performance measures 220. In one implementation, the evaluation module 110 is further configured to allow the first evaluator to add customized performance measures to the existing performance measures 220. In yet another implementation, if the role of the employee remains unchanged for, say, in the last two performance cycles, then the evaluation module 110 may display the performance measures 220 of the previous cycles as well.

Subsequently, the notification module 212 sends a notification to the second evaluator to review the performance measures 220 selected by the first evaluator. The second evaluator can approve or reject the performance measures 220. In one implementation, the second evaluator may not be provided with rights to modify the performance measures 220. Once the second evaluator has reviewed the performance measures 220, the notification module 212 sends an approval or rejection notification to the first evaluator. The notification module 212 sends an approve notification if the performance measures 220 are approved by the second evaluator. The notification module 212 sends a rejection notification if the performance measures 220 are rejected by the second evaluator. In one implementation, the second evaluator may also provide comments for rejection of the performance measures 220. The comments may be sent along with the reject notification to the first evaluator. The first evaluator may modify the performance measures 220 after the second evaluator reviews the performances measure 220. Additionally, the notification module 212 may again requests the second evaluator to reconsider and approve the performance measures 220. In one implementation, the second evaluator can again reject the performance measures 220. In one implementation, if the second evaluator receives the reject notification by first evaluator for a predetermined number of times, the approval by the second evaluator is deemed to have been provided by the evaluation module 110. In case of performance evaluation process, after the performance measures 220 are set for the employee, the notification module 212 may send a review notification to the employee whose evaluation is under consideration to review the performance measures 220 decided for him or her. The evaluation module 110 may allow the employee to communicate with the performance management system 102 through the client device 106-1 to approve or reject the performance measures 220 selected by the first evaluator. The notification module 212 may send an approve or reject notification to the first evaluator. The first evaluator may update the performance measures 220 based on the notification received. In one implementation, the notification module 212 may send a notification to the employee informing the revision of the performance measures 220.

Once the performance measures 220 are fixed for the employee, the notification module 212 sends an evaluation notification to the first evaluator. The first evaluator provides a rating against each of the performance measures 220 set for the employee. The employee may also provide ratings to oneself as part of the self evaluation. In an implementation, the evaluation module 110 is configured to provide an option for making comments. The notification module 110 can also provide an error message if the rating is not provided against any one of the performance measures 220.

Subsequent to evaluation, the notification module 212 sends a notification to the second evaluator to review the evaluation done by the first evaluator. The second evaluator, through the client device 106 reviews the evaluation done by the first evaluator. The second evaluator may accept or reject the evaluation done by the first evaluator. In this case, the notification module 212 sends a notification to the first evaluator that the evaluation done by him or her has not been accepted by the second evaluator. The evaluation module 110 is configured to interact with the first evaluator to modify the rating provided for different performance measures 220 as set for the employee. The notification module 212 sends a notification of the modifications made to the ratings to the second evaluator. The notification to the second evaluator is send even if the ratings are not modified by the first evaluator and are considered as final. In one implementation, the evaluation module 110 may allow the second evaluator to reject the evaluation provided by the first evaluator for only for a predetermined number of times. Subsequently, the evaluation module 110 may accept the evaluation even if it is not approved by the second evaluator.

Subsequent to the review, the analysis module 214 analyses the evaluation done by the first evaluator. The analysis module 214 may also consider the self evaluation done by the employee. Based on the analysis, the analysis module 214 provides an assessment score 222. In one implementation, the assessment score 222 is calculated using some predefined rules, for example, by taking a sum of a weighted average of each of the ratings provided against each of the performance measures 220. The assessment score 222 indicates performance of the employee in the organization.

In case of a promotion process, based on the assessment score 222, the employee may be promoted to the proposed role. If the employee is promoted to the proposed role, the notification module 212 sends a notification to the validation module 108 to update the current role as the proposed role in the database.

The assessment score 222, is indicative of the performance of the employee in the organization. In an implementation, based on a certain predefined threshold level, the employee may be identified as a good performer, an average performer or an under performer. For example, if the assessment score 222 of the employee is above a value x, the employee is a good performer; if the score is between x and y, the employee is an average performer; and if the score is below y, the employee is an under performer. The notification module 212 notifies the assessment score 222 to the employee.

In one embodiment, the performance improvement process may be implemented by the performance management system 102 if the employee is not performing well. In one implementation, if the employee falls in the category of the underperformer, the evaluation module 110 automatically initiates the performance improvement process for that employee. In another implementation, the first evaluator, on the basis of the current assessment score 222, or if required, a previous assessment score 222, may initiate the performance improvement process.

The notification module 212 sets a timeline of the performance improvement process to closely measure the performance of the employee for a predefined evaluation period, for example, of 90 days. Accordingly, the timeline of the performance improvement process may correspond to the predefined evaluation period. In one embodiment, the performance management system 102 may carry out the performance improvement process similar to the performance evaluation process. The first evaluator interacts with the evaluation module 110 to set performance measures 222 for the employee, for every predetermined interval, for example, 15 days. The first evaluator provides a rating against the performance measure 220 similar to the performance evaluation process at the end of every interval. At the end of the performance evaluation process period, a cumulative assessment score 222 is calculated based on the assessment score 222 of all the intervals.

Further, the performance management system 102 is configured to carry out a performance band identification process. The performance band identification process may be explained in context of an organization that includes different operating units that may be formed based on various projects that currently run in the organization. In such a scenario, a performance band is allocated to the employees in the corresponding operating unit based on the relative comparison of the assessment score 222 of the employee with the assessment score 222 of other employees.

For the purposes of identifying the performance band, the validation module 108 tags the employees to their respective operating units based on the project allocation of the employee. The analysis module 214 may generate different performance bands for each operating unit. The analysis module 214 may identify a particular performance band in an operating unit for an employee by comparing the assessment score 222 of that employee with the assessment score of other employees. For example, the analysis module 214 may use a set of preconfigured rules to indentify that the top 15% of the employees may be in a performance band 1, which is considered to be the highest performance band, next 25% in a performance band 2, and so on. After the performance bands are identified, the analysis module 214 may arrange the employees in a particular operating unit in descending order of their assessment score 222. The analysis module 214 then generates performance bands for all the employees on the basis of the defined bands. For example, the employees having assessment score 222 in top 15% are given band 1, the next 25% are given band 2 and so on. The above example is only for purposes of illustration and in no way should be construed as limiting. Various other examples and embodiments will be apparent to one skilled in the art.

After the bands are assigned to different employees by the analysis module 214, the notification module 212 sends a notification to the employee about the performance band. The employee has an option to agree or disagree to be in the performance band assigned to him or her and make entry to that effect as a notification for the evaluation module 110 indicating the same. If the employee disagrees to the assigned performance band, the notification module 212 sends a notification to the evaluation module 110. The evaluation module 110 may verify the analysis done earlier and based on the verification may or may not update the performance band. If the analysis module 214 receives the request to change the performance band a predetermined number of times the analysis module 214 rejects the request and the performance band has to be accepted by the employee who made such a request.

### EXEMPLARY METHODS

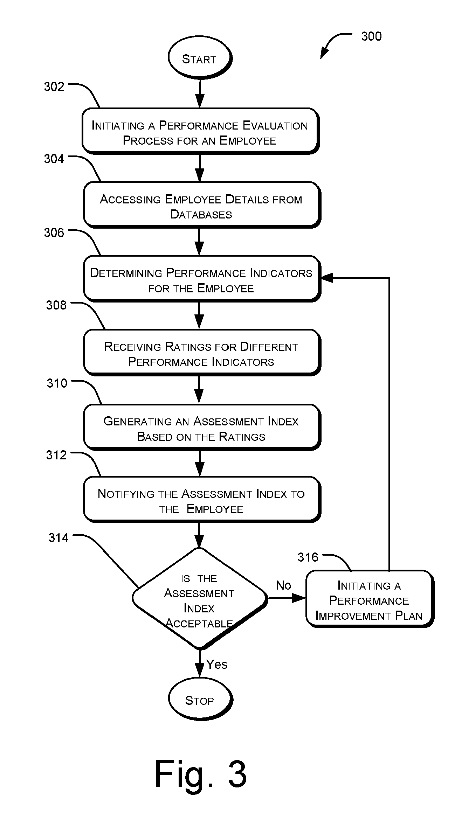

Fig. 3, Fig. 4, and Fig. 5 illustrate an exemplary method 300 to implement a performance evaluation process, an exemplary method 400 to implement a promotion process, and an exemplary method 500 to identify a performance band of an employee in an organization respectively, according to an embodiment of the present subject matter.

The exemplary methods may be described in the general context of computer executable instructions. Generally, computer executable instructions can include routines, programs, objects, components, data structures, procedures, modules, functions, etc., that perform particular functions or implement particular abstract data types. The methods may also be practiced in a distributed computing environment where functions are performed by remote processing devices that are linked through a communications network. In a distributed computing environment, computer executable instructions may be located in both local and remote computer storage media, including memory storage devices.

The order in which the methods are described is not intended to be construed as a limitation, and any number of the described method blocks can be combined in any order to implement the method, or an alternative method. Additionally, individual blocks may be deleted from the methods without departing from the spirit and scope of the subject matter described herein. Furthermore, the methods can be implemented in any suitable hardware, software, firmware, or combination thereof.

In accordance with one embodiment of the present subject matter, the methods 300, 400 and 500 may be implemented in the previously described performance management system 102. However, it will be appreciated by one skilled in the art that such an implementation is not limiting. The method 300, 400 and 500 may be implemented in a variety of performance evaluation and assessment system.

Referring to Fig. 3, at block 302, a query is generated to initiate a performance evaluation process. In one implementation, an employee or a member of the first evaluator group generates a query to initiate the performance evaluation process. For example, an employee, through a client device, say a client device 106-1, generates a query to initiate the performance evaluation process. In another example, a member of a first evaluator group may also generate a query to initiate the performance evaluation process.

At block 304, employee details corresponding to the employee under consideration for performance evaluation process is accessed from different databases. In one implementation, the employee details correspond to employee data 218. In order to access the employee details, a validation module 108, in response to the query generated at block 302, access the employee details from various databases. The employee details correspond to the information such as employee identification number, current role of the employee, project allocation for the employee, etc.

Once the employee details are accessed, the employee details are made available to the employee under consideration for validation. In an implementation, the validation module 108 sends the employee details to the employee under consideration or the first evaluator for validation of employee details. In case there are discrepancies in the employee details, a modification may be made based on a request for updation made by the employee or the first evaluator.

At block 306, the performance indicators for the employee are determined. In one implementation, performance indicators correspond to the performance measures 220. In one implementation, a notification is sent to the first evaluator to set one or more performance indicators for the employee. For the purpose, the first evaluator interacts with the evaluation module 110 to identify a role of the employee. The performance indicators corresponding to the identified role are provided to the first evaluator. The first evaluator may choose one or all the performance indicators.

At block 308, ratings are received for each of the performance indicators. Once the performance indicators are set a notification is sent to the employee whose performance is to be evaluated to provide a self rating against each of the performance indicator. After the ratings by the employee are provided, a notification is sent to the first evaluator to provide a rating against each of the performance indicator and also review the self evaluation done by employee. Similarly, the second evaluator is also notified to review the evaluation done by the first evaluator.

At block 310, an assessment index is generated. After the evaluation by the employee and the first evaluator is completed, the evaluation is analyzed to generate the assessment index. In one implementation, the analysis module 214, based on the ratings provided at block 308 by the employee and the first evaluator, generates an assessment index such as the assessment score 222 which is an indicator of the performance of the employee in the organization.

In one implementation, based on the assessment index, the performance of the employee is assessed. For example, the employee may be assessed as a good performer, an average performer, and an under performer.

At block 312, the employee is notified of the assessment index. For example, a notification is sent to the employee about the corresponding assessment index.

At block 314, the evaluation module 110 determines whether the assessment index is acceptable or not. If the assessment index is acceptable, for example, the assessment index is above a certain predefined threshold, the performance evaluation process ends. If the assessment index is not acceptable the performance improvement process is initiated.

At block 316, the performance improvement process may be initiated for an employee. For example, if the employee falls under the category of an under performer, the performance improvement process for the employee may be initiated. The performance improvement process is similar to performance evaluation process. In case of performance improvement process, after the performance indicators are identified for the employee based on the current role, ratings are provided for the performance indicators and based on the rating provided assessment index of the employee is calculated. The performance improvement process may follow a timeline to measure the performance of the employee under consideration for a predefined period, for example, 90 days. The performance indicators are set for the employee for every predetermined interval, for example, 15 days. The first evaluator provides a rating against the performance indicator similar to the performance evaluation process at the end of every interval. At the end of the performance evaluation process period, a cumulative assessment index is calculated based on the assessment of all the intervals. In one implementation, if the assessment index is still below acceptance, the evaluation process ends and a process such as a termination process may further be initiated.

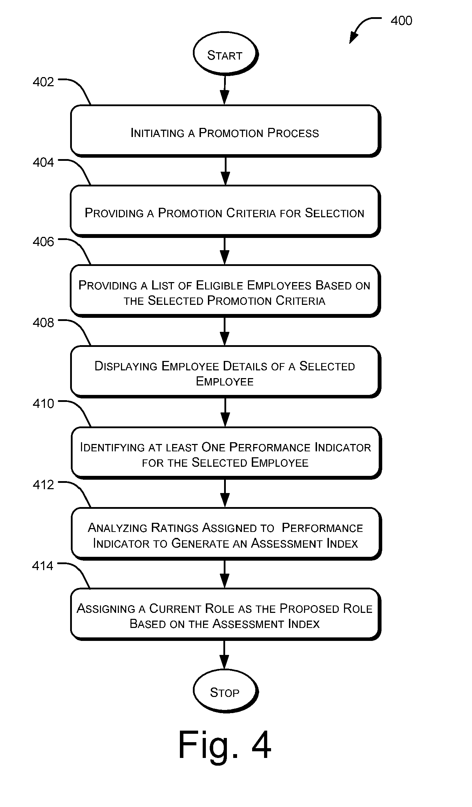

Referring to Fig. 4, at block 402, a promotion process is initiated. A first evaluator generates a query to initiate the promotion process.

At block 404, promotion criteria are provided. The first evaluator selects a promotion criteria. The promotion criteria includes role of the employee, grade, number of years in the current role or organization, total work experience etc. For example, the first evaluator may choose that an employee can be promoted to the next level if he/she has completed 3 years in the current role.

At block 406, a list of eligible employees based on the selected promotion criteria is displayed. After the promotion criteria is selected, the eligibility of the employees for the promotion is determined. For example, if the employee has been working in the organization for the last 2 years the employee may be eligible for promotion process. A list of all the eligible employees who meet the selected criteria is then displayed. Further, the first evaluator may select an employee for the promotion process from the list of employees who can be promoted.

At block 408, the employee details are displayed. For example employee details are displayed through a promotion form. In one implementation, the validation module 108 accesses the employee details from various databases. In said implementation, the employee details correspond to the employee data 218. The employee details are validated by the first evaluator. The first evaluator sends a request for modifying or updating the employee details to validation module 108 in case the employee details are not correct.

At block 410, one or more performance indicators are identified for the employee under consideration. For example performance indicator can be timeliness of a project, managerial skills exhibited by the employee, number of projects completed. In order to identify the performance indicators for the promotion process the first evaluator may select the role proposed for the employee. Based on the proposed role, the corresponding performance indicators for the promotion process are provided. In one implementation, the first evaluator may also provide performance indicators based on strength and competencies exhibited by the employee in the current role. The first evaluator may choose one or more of the performance indicators.

At block 412, ratings assigned to different performance indicators are analyzed to generate an assessment index. In one implementation, assessment index corresponds to assessment score 222. For the purpose, after the performance indicators are set for the employee, the first evaluator provides a rating for each of the performance indicators. In one implementation, ratings provided can also be recommendation and suggestions. The ratings provided for the performance indicators are analyzed to generate the assessment index. Based on the assessment index, a determination is made whether the employee can be promoted to the proposed role.

At block 414, the current role of the employee is assigned as the proposed role. For example, if the assessment index is above the predefined range, the employee can be promoted to the proposed role. In case the employee is promoted, current role of the employee is updated as the proposed role. The employee is notified of the promotion.

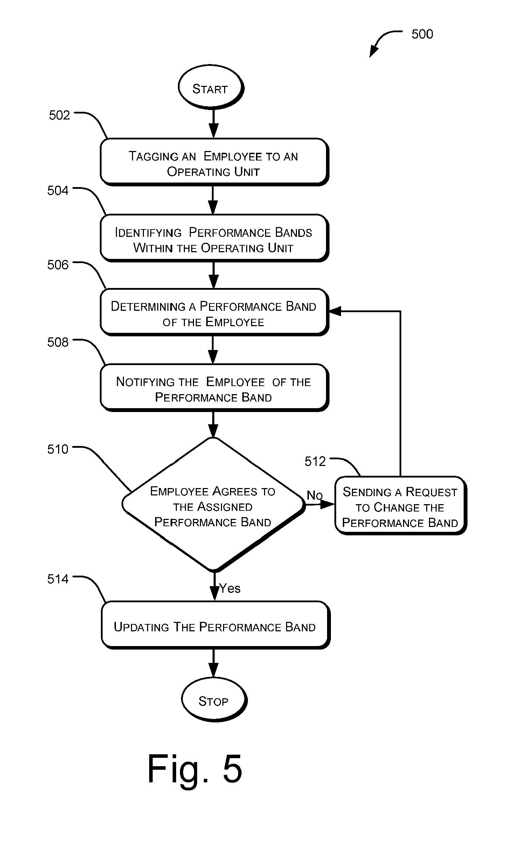

Referring to Fig. 5, at block 502, a performance band identification process is initiated for an employee. An employee is tagged to an operating unit. Operating units can be formed in an organization based on the projects going on in the organization. In one implementation, the validation module 108 tags the employee to one of the operating units. For example, the employee may be tagged to the operating unit on the basis of the project the employee is working on.

At block 504, different performance bands within each operating unit are identified. For example, the analysis module 214, using a set of predefined rules, identifies the performance bands within each operating unit. After the performance bands are identified a determination is made on the number of employees that can be assigned to each performance band based on certain predefined rules. For example, the analysis module 214, on the basis of different predefined rules, determines that the performance band 1 has top 10% employees on the basis of the assessment index such as assessment score 222, band 2 has next 25%, band 3 has next 35% and so on.

At block 506, a performance band of a given employee is determined. In order to identify the performance band for a particular employee in an operating unit, the assessment index of the employee is compared with the assessment indices of other employees in the operating unit. In one implementation assessment index corresponds to assessment score 222. Based on the comparison, a performance band of the employee is determined. In one implementation, the analysis module 214 arranges all the employees in a descending order of their assessment scores 222. Further, based on predefined rules as discussed at block 504, a performance band corresponding to the employee is determined. For example, if the assessment index of the employee is greater than the assessment index of 90% of the employees, i.e., the employee is among 10% of the top scoring employees, then the performance band 1 is associated with the employee.

At block 508, the employee is notified about the assigned performance band. A notification is sent to the employee about his or her performance band.

At block 510, a determination is made whether the employee agrees to the assigned performance band or not. If the employee agrees to the assigned band, the performance band of the employee is updated in the databases at block 514. If the employee disagrees to the assigned band, a request is sent to change the performance band at block 512.

At block 512, a request for changing the performance band is sent. If the employee disagrees to the performance band, a notification is sent to change the performance band of the employee. The predefined rules associated with identification of the performance band are validated. In one implementation, a determination is made whether the assessment index generated earlier in the performance evaluation process is correct or not. In another implementation, a determination is made whether the number of employees identified in each performance bands in the operating unit is correct or not.

After the verification process, a new performance band is allocated or the previous performance band is notified to the employee. The employee can again agree or disagree to the assigned band. In one implementation, the employee can disagree to the performance band only for a predetermined number of times.

At block 514, the assigned performance band is updated in the database where the other information pertaining to the employee is stored.

### CONCLUSION

Although embodiments for evaluating and managing the performance of an employee in an organization have been described in language specific to structural features and/or methods, it is to be understood that the invention is not necessarily limited to the specific features or methods described. Rather, the specific features and methods for evaluating and managing the performance of an employee are disclosed as exemplary implementations of the present invention.

## Claims

1. A performance management system (102) comprising:
a processor (202); and
a memory (206) coupled to the processor (202), wherein the memory (206) comprises an evaluation module (110) configured to:
receive a rating for at least one performance measure (220) based on a query received to initiate a performance management process; and
generate an assessment score (222) for an employee based on the rating received for the at least one performance measure (220).

2. The performance management system (102) as claimed in claim 1, the performance management process comprises at least one of a performance evaluation process, a promotion process, and a performance improvement process.

3. The performance management system (102) as claimed in claim 1, wherein the at least one performance measure (220) is based in part on a role of the employee in the organization.

4. The performance management system (102) as claimed in claim 1 further comprising a notification module (212) configured to at least define a timeline for the performance management process.

5. A computer implemented method for managing performance of an employee in an organization, the method comprising:
receiving a query to initiate a performance management process;
identifying at least one performance indicator based on the received query;
receiving a rating for each of the at least one performance indicator; and
generating an assessment index based on an analysis of the received rating using a set of predefined rules, wherein the assessment index is indicative of the performance of the employee.

6. The computer implemented method as claimed in claim 5, wherein the method further comprises categorizing the employee in a performance category from among a plurality of performance categories based on the assessment index.

7. The computer implemented method as claimed in claim 5, wherein the method further comprises providing a criteria for a promotion process.

8. The computer implemented method as claimed in claim 5, wherein the method further comprises assigning a current role of the employee as a proposed role based on the assessment index.

9. The computer implemented method as claimed in claim 5, wherein the analyzing further comprises calculating the assessment index by taking a weighted average of the at least one rating.

10. The computer implemented method as claimed in claim 5, wherein the method further comprises:
comparing the assessment index of the employee with the assessment index of other employees in an operating unit;
determining a performance band of the employee based the comparison.

11. A computer-readable medium having embodied thereon a computer program for executing a method for managing performance of an employee in an organization, the method comprising:
receiving a query to initiate a performance management process;
identifying at least one performance indicator based on the received query;
receiving a rating for each of the at least one performance indicator; and
generating an assessment index based on an analysis of the received rating using a set of predefined rules, wherein the assessment index is indicative of the performance of the employee.

12. The computer-readable medium as claimed in claim 11, wherein the method further comprises at least one of a performance evaluation process, a promotion process, and a performance improvement process.

13. The computer-readable medium as claimed in claim 11, wherein the at least one performance indicator is based in part on a role of the employee in the organization.

14. The computer-readable medium as claimed in claim 11, wherein the analyzing further comprises calculating the assessment index by taking a weighted average of the at least one rating.

15. The computer-readable medium as claimed in claim 11, wherein the method further comprises defining a timeline for the performance management process
